# EUROPÄISCHE PATENTANMELDUNG

(11) **EP 1 467 078 A1**
(43) Veröffentlichungstag der Anmeldung: **13.10.2004**
(21) Anmeldenummer: 04100456.5
(22) Anmeldetag: 06.02.2004
(51) Int. Cl.: F02D 41/00, F02D 31/00, F02D 37/00

(54) **Verfahren und Vorrichtung zur Steuerung einer Brennkraftmaschine**

(30) Priorität: 07.04.2003 DE 10315814
(71) Anmelder: Robert Bosch GmbH, 70442 Stuttgart (DE)
(72) Erfinder: Leuz, Marcus, 93404, Saint Ouen Cedex (FR); Muerlebach, Michael, 92100, Boulogne Billancourt (FR); Mouillard, Laurent, 92370, Chaville (FR)

(57) **Zusammenfassung**

Verfahren zur Steuerung einer Brennkraftmaschine mit einer als Ruckeldämpfer ausgebildeten Steuerung, die durch ansteuern der Einspritzmenge die Drehzahl und/oder das abgegebene Moment der Brennkraftmaschine steuert. Wenn das Abgasnachbehandlungssystem sich in einem Regenerationsbetrieb befindet wird die Drehzahl und/oder das abgegebene Moment mittels des Einspritzbeginns oder mittels des Einspritzbeginns und der kraftstoffmenge gesteuert.

## Beschreibung

### Stand der Technik

Die Erfindung betrifft ein Verfahren und eine Vorrichtung zur Steuerung einer Brennkraftmaschine gemäß den Oberbegriffen der unabhängigen Ansprüche.

Ein Verfahren und eine Vorrichtung zur Steuerung einer Brennkraftmaschine ist beispielsweise aus der DE 33 43 854 bekannt. Die dort beschriebene Steuerung regelt die Drehzahl der Brennkraftmaschine auf einen vorgegebenen Wert ein.

In Kraftfahrzeugen werden oft durch das Zusammenwirken von Brennkraftmaschine, elastischer Aufhängung und schwingungsfähigen Massen Ruckelschwingungen angeregt, die sich störend auf das Verhalten des Kraftfahrzeugs auswirken. Solche Schwingungen können auch durch Beschleunigen oder Abbremsen angeregt werden. Solchen Schwingungen wirkt der Stand der Technik dadurch entgegen, dass er die eingespritzte Kraftstoffmenge in geeigneter Weise beeinflusst.

Solche Ruckelschwingungen wirken sich in messbaren Schwankungen der Drehzahl aus. Diese Drehzahlschwankungen werden üblicherweise aus einem differenzierten Drehzahlsignal abgeleitet. Ausgehend von diesem differenzierten Drehzahlsignal wird dann die Kraftstoffmenge entsprechend korrigiert.

Umfasst die Brennkraftmaschine ein Abgasnachbehandlungssystem, so tritt die folgende Problematik auf. Solche Abgasnachbehandlungssysteme, insbesondere ein Partikelfilter und/oder ein Stickoxidkatalysator, müssen gelegentlich regeneriert werden. Hierzu ist ein Regenerationsbetrieb des Gesamtsystems vorgesehen.

In solchen Sonderbetriebszuständen kann der Fall eintreten, dass eine Änderung der eingespritzten Menge keine entsprechende Wirkung auf die Drehzahl und/oder auf das abgegebene Moment bewirkt. So kann beispielsweise während des Regenerationsbetriebs eine extreme Verstellung der Haupteinspritzung in Richtung einer späten Einspritzung erfolgen, um die Abgastemperatur zu erhöhen. Dies hat zur Folge, dass die Wirkungsweise des Ruckeldämpfers nicht mehr voll gewährleistet ist, da die Mehrmenge bei einer solchen späten Einspritzung nicht mehr vollständig oder gar nicht mehr in Drehmoment umgewandelt wird. Eine entsprechende Korrektur der Kraftstoffinenge wirkt sich daher nicht mehr in dem gewünschten Umfang aus.

Erfindungsgemäß ist deshalb vorgesehen, dass abhängig vom Betriebszustand der Brennkraftmaschine wahlweise ein erstes und/oder ein zweites Stellglied von der Steuerung angesteuert wird.

Besonders vorteilhaft ist es, wenn in einem ersten Betriebszustand das erste Stellglied, und in einem zweiten Betriebszustand ein zweites Stellglied angesteuert wird. Vorzugsweise ist dabei der erste Betriebszustand durch den Normalbetrieb, und der zweite Betriebszustand durch einen Sonderbetriebszustand, insbesondere einen Regenerationsbetrieb des Abgasnachbehandlungssystems, gekennzeichnet. Besonders vorteilhaft ist es, wenn während des Regenerationsbetriebs des Abgasnachbehandlungssystems das zweite Stellglied den Verbrennungszeitpunkt bestimmt. Dies wird vorzugsweise dadurch realisiert, dass der Einspritzbeginn abhängig vom Ausgangssignal der Steuerung beeinflusst wird.

Besonders vorteilhaft ist es, wenn im Regenerationsbetrieb eines Abgasnachbehandlungsssystems der Ruckeldämpfer die Korrektur des Drehmoments durch Verändern des Einspritzbeginns beeinflusst.

### Zeichnung

Die Erfindung wird nachstehend anhand der in der Zeichnung dargestellten Ausführungsform erläutert.

### Beschreibung der Ausführungsbeispiele

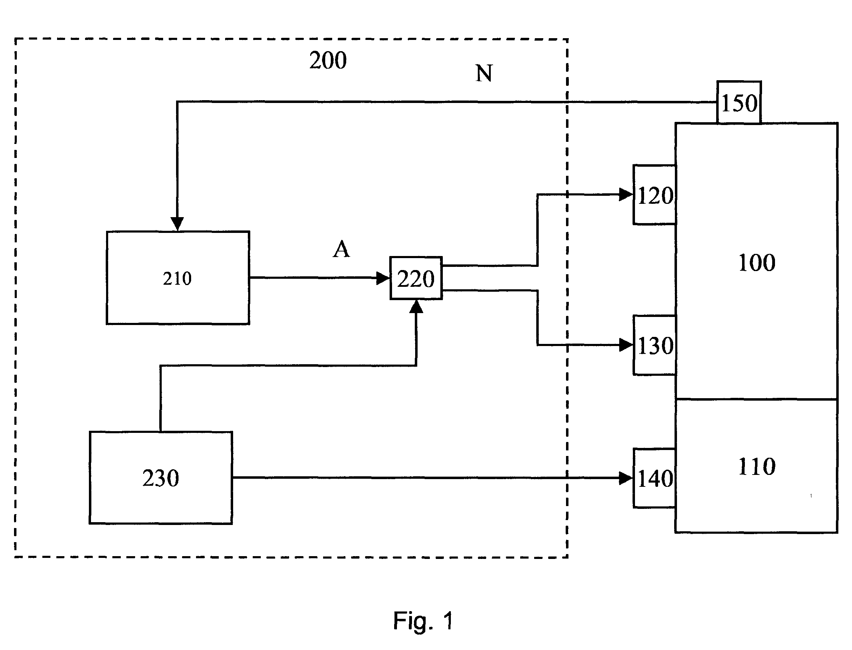

In der Figur 1 ist die erfindungsgemäße Vorgehensweise am Beispiel eines Ruckeldämpfers und eines Abgasnachbehandlungssystems beschrieben. Die Vorgehensweise ist nicht auf diese Anwendung beschränkt. Sie kann immer dann eingesetzt werden, wenn in einem Sonderbetriebszustand eine Veränderung der Kraftstoffmenge nicht die gewünschte Reaktion der Brennkraftmaschine zur Folge hat.

Eine Brennkraftmaschine ist mit 100 bezeichnet. Dieser Brennkraftmaschine 100 ist ein Abgasnachbehandlungssystem 110 zugeordnet. Ferner ist ein erster Steller 120, ein zweiter Steller 130 und ein dritter Steller 140 vorgesehen. Mit dem ersten und dem zweiten Steller 120 und 130 kann die Leistungsabgabe bzw. das von der Brennkraftmaschine abgegebene Drehmoment und damit die Drehzahl der Brennkraftmaschine beeinflusst werden. Der dritte Steller 140 dient insbesondere zur Steuerung eines Sonderbetriebszustands des Abgasnachbehandlungssystems, insbesondere zur Steuerung eines Regenerationsbetriebs des Abgasnachbehandlungssystems 110.

An der Brennkraftmaschine 100 sind ferner verschiedene Sensoren angeordnet. Insbesondere ist ein Sensor 150 vorgesehen, der ein Drehzahlsignal N bereitstellt. Dieses Drehzahlsignal N wird einer Steuerung 200 zugeleitet. Diese Steuerung 200 umfasst u. a. einen sogenannten Ruckeldämpfer 210. Dessen Ausgangssignal A gelangt über eine Umschaltung 220 zu dem ersten und/oder zu dem zweiten Steller 120 und/oder 130. Ferner umfasst die Steuerung eine Abgasnachbehandlungssteuerung 230. Diese beaufschlagt insbesondere den dritten Steller 140. Ferner beaufschlagt die Abgasnachbehandlungssteuerung 230 die Umschaltung 220 mit einem Ansteuersignal.

Der Ruckeldämpfer ist derart ausgebildet, dass er die Drehzahl der Brennkraftmaschine erfasst und durch Einwirken auf den ersten Steller und/oder den zweiten Steller auftretende Drehzahlschwankungen entgegenwirkt. Hierzu kann beispielsweise vorgesehen sein, dass der Ruckeldämpfer die Drehzahl differenziert und bei Überschreiten bestimmter Schwellenwerte des differenzierten Drehzahlsignals ein momentenerhöhendes oder ein momentenerniedrigendes Signal an den ersten Steller und/oder an den zweiten Steller abgibt.

Besonders vorteilhaft ist es, wenn der erste Steller 120 die Kraftstoffzumessung in die Brennkraftmaschine beeinflusst. Der zweite Steller 130 beeinflusst den Verbrennungsbeginn. Dies erfolgt beispielsweise dadurch, dass der Einspritzbeginn entsprechend verändert wird. Bei einer Ausgestaltung der Erfindung kann auch vorgesehen sein, dass der erste Steller und der zweite Steller eine bauliche Einheit bilden. So können der erste Steller und der zweite Steller als Magnetventil ausgebildet sein, das sowohl den Einspritzbeginn als auch die Einspritzdauer und damit die eingespritzte Kraftstoffmenge bestimmt.

Erfindungsgemäß ist nun vorgesehen, dass im Normalbetrieb das Ausgangssignal des Ruckeldämpfers dem ersten Steller, der die einzuspritzende Kraftstoffmenge beeinflusst, zugeleitet wird. In bestimmten Betriebszuständen erfolgt nun eine Regeneration des Abgasnachbehandlungssystems, bei der die Abgasnachbehandlungssteuerung 230 den dritten Steller 140 mit entsprechenden Signalen beaufschlagt. Dieser dritte Steller kann bei einer bevorzugten Ausführungsform eine bauliche Einheit mit dem ersten und/oder dem zweiten Steller bilden. So kann beispielsweise vorgesehen sein, dass zur Regenerierung des Abgasnachbehandlungssystems eine Teileinrichtung in Richtung einer späten Einspritzung verschoben wird.

Wird ein entsprechendes Signal von der Abgasnachbehandlungssteuerung 230, das eine Regeneration einleitet und/oder durchführt, abgegeben, so wird vorzugsweise gleichzeitig ein Signal an die Umschaltung 220 übermittelt, die bewirkt, dass das Ausgangssignal des Ruckeldämpfers zu dem zweiten Steller 130 gelangt. Dies bedeutet: Erfolgt eine Regeneration des Abgasnachbehandlungssystems, wirkt der Ruckeldämpfer nicht auf die Kraftstoffmenge, sondern auf eine Größe, die den Verbrennungsbeginn beeinflusst. Insbesondere ist vorgesehen, dass der Ruckeldämpfer auf den Einspritzbeginn einwirkt.

Bei einer vorteilhaften Ausgestaltung kann auch vorgesehen sein, dass beide Steller gleichzeitig angesteuert werden, d. h. dass die übliche Korrektur der Einspritzmenge erfolgt und der Einfluss der verspäteten Einspritzung dadurch kompensiert wird, dass zusätzlich der Einspritzzeitpunkt entsprechend korrigiert wird.

Das Ausgangsignal des Ruckeldämpfers 210 kann wahlweise dem ersten Steller, dem zweiten Steller oder beiden Steilem zugeleitet wird. Diese Umschaltung erfolgt abhängig davon, ob ein Sonderbetriebszustand der Brennkraftmaschine 100, des Abgasnachbehandlungssystems 110 oder des Gesamtsystems vorliegt.

Die erfindungsgemäße Vorgehensweise ist dabei nicht auf dem Betriebszustand der Regeneration eines Abgasnachbehandlungssystems beschränkt. Sie kann auch in anderen Betriebszuständen angewandt werden, in denen eine Korrektur der Kraftstoffinenge einen verminderten Einfluss auf die Änderung des Drehmoments besitzt. Ferner ist die Vorgehensweise nicht auf einen Ruckeldämpfer beschränkt, die Vorgehensweise kann auch bei anderen Steuerung der Brennkraftmaschine eingesetzt werden.

## Patentansprüche

1. Verfahren zur Steuerung einer Brennkraftmaschine mit einer Steuerung, die durch ansteuern eines ersten Stellgliedes die Drehzahl und/oder das abgegebene Moment der Brennkraftmaschine steuert, **dadurch gekennzeichnet, dass** in einem Sonderbetriebszustand die Drehzahl und/oder das abgegebene Moment mittels eines zweiten Stellgliedes oder mittels eines zweiten Stellgliedes und des ersten Stellgliedes gesteuert wird.

2. Verfahren nach Anspruch 1, **dadurch gekennzeichnet, dass** die Steuerung als Ruckeldämpfer ausgebildet ist.

3. Verfahren nach einem der vorhergehenden Ansprüche, **dadurch gekennzeichnet, dass** das zweite Stellglied angesteuert wird, wenn ein Abgasnachbehandlungssystem sich in einem Regenerationsbetrieb befindet.

4. Verfahren nach einem der vorhergehenden Ansprüche, **dadurch gekennzeichnet, dass** das erste Stellglied die eingespritzte Kraftstoffmenge bestimmt.

5. Verfahren nach einem der vorhergehenden Ansprüche, **dadurch gekennzeichnet, dass** das zweite Stellglied den Verbrennungszeitpunkt, insbesondere den Einspritzbeginn, bestimmt.

6. Vorrichtung zur Steuerung einer Brennkraftmaschine mit einer Steuerung, die durch ansteuern eines ersten Stellgliedes die Drehzahl und/oder das abgegebene Moment der Brennkraftmaschine steuert, **dadurch gekennzeichnet, dass** Mittel vorgesehen sind, die in einem Sonderbetriebszustand die Drehzahl und/oder das abgegebene Moment mittels eines zweiten Stellgliedes oder mittels eines zweiten Stellgliedes und des ersten Stellgliedes steuern.
